# EUROPEAN PATENT SPECIFICATION

(11) **EP 3 904 744 B1**
(45) Date of publication and mention of the grant of the patent: **12.02.2025**
(21) Application number: 18944483.9
(22) Date of filing: 27.12.2018
(51) Int. Cl.: H02G 3/04, F16L 3/01, F16M 11/20, A47B 13/02, A47B 21/06, A47B 96/14, F16M 11/22, F16M 13/04

(54) **STRUCTURAL ASSEMBLY FOR SUPPORTING ELECTRICAL AND/OR ELECTRONIC MODULES**
BAUGRUPPE ZUR HALTERUNG VON ELEKTRISCHEN UND/ODER ELEKTRONISCHEN MODULEN
ENSEMBLE STRUCTURAL POUR SUPPORT DE MODULES ÉLECTRIQUES ET/OU ÉLECTRONIQUES

(43) Date of publication of application: 03.11.2021
(73) Proprietor: Schneider Electric España, S.A., 08019 Barcelona (ES)
(72) Inventor: REBOLÉ OLLETA, José Antonio, 31100 PUENTE LA REINA (NAVARRA) (ES); BRETECHER, Philippe Pierre, 31100 PUENTE LA REINA (NAVARRA) (ES); DAMIEN DELOY, Jonathan, 31100 PUENTE LA REINA (NAVARRA) (ES); SAINZ HERMOSO, Pedro Matías, 31100 PUENTE LA REINA (NAVARRA) (ES); SUESCUN ORRILLO, César, 31100 PUENTE LA REINA (NAVARRA) (ES)
(74) Representative: Evens, Paul Jonathan
(86) International application number: PCT/ES2018/070836
(87) International publication number: WO 2020/136287

(56) References cited:
- EP-A2- 0 945 945
- EP-A2- 1 335 462
- ES-T3- 2 248 473
- FR-A1- 2 811 815
- GB-A- 2 346 267
- US-A- 6 119 317
- US-A1- 2006 054 752
- US-A1- 2011 210 090
- US-B2- 7 703 737
- ANONYMOUS 1: "Columns & Poles", 26 November 2014 (2014-11-26), pages 1 - 7, XP055932897, Retrieved from the Internet <URL:https://docs.rs-online.com/bbc4/0900766b81666d9a.pdf> [retrieved on 20220620]

## Description

### Technical field

The present invention is related to the industry dedicated to electrical conduits which make it possible to have electrical and/or electronic modules for connecting electrical and/or electronic devices.

### State of the art

Currently, electrical conduits are widely known which have electrical and/or electronic modules with one or more outlets configured as connection points in order to provide one or more electrical and/or data connections, said outlets being arranged according to fixed locations, either for example in columns, walls, tabletops or table legs, etc.

Today, the use of electronic devices which require power and/or data is constantly growing and electrical conduits tend to fall short in terms of the number of connection points when providing power and/or data to electronic devices that can be concentrated in a specific location, in addition to not being flexible in terms of the possibility of varying the arrangement thereof.

On the contrary, the aforementioned electronic devices currently provide high flexibility when being moved to another place, mainly due to the ever-decreasing weight and/or volume thereof. This flexibility entails, in addition to the need to have a possibility when increasing the number of electrical connections and/or the amount of data, the need to also have a capacity when establishing said connections according to the variability in the location of use had by said electronic devices.

Conventionally, the solution used is the arrangement of multiple electrical and/or electronic elements, or similar elements, which arranged anchored to furniture elements, such as tables, or structural elements, such as walls or columns, provide a degree of flexibility such that the electronic devices make use of the corresponding fixed outlets in order to be powered when a user is moved to the electrical conduit arranged in correspondence with said table, column or wall.

This solution, however, results in an anchored, i.e., fixed, arrangement of said outlets which prevents, or at least significantly hinders, adapting the placement thereof in order to suit different users. Furthermore, this solution does not favour the replacement of these multiple electrical and/or electronic elements or similar, nor the placement of additional elements thereof such that a reconfiguration can be performed of the electrical conduit had by the corresponding multiple electrical and/or electronic element, or similar, fixed thereto, at least not in an ordered and uncluttered manner of cables belonging to said elements or similar.

In view of the described disadvantages or limitations had by currently existing solutions, a solution which provides ease, simplicity and flexibility is necessary when having the electrical and/or electronic modules both with regards to a variable location and with regards to removing, updating or installing the modules according to the needs of the users.

FR 2811815 relates to a column for supporting electrical equipment and routing power transmission cables, and discloses a structural assembly according to the pre-amble of appended independent claim 1.

US 2011/0210090 relates to a support stand for mounting a plurality of components thereto.

### Object of the invention

To meet this objective and solve the technical problems mentioned up until now, in addition to providing additional advantages which can be derived below, the present invention provides a structural assembly for supporting electrical and/or electronic modules, as defined in appended independent claim 1. Embodiments are defined in appended claims dependent on appended claim 1.

The structural assembly comprises a longitudinally extending tubular structure defining a support end and an operational end, axially opposed to the support end, and a base for holding the tubular structure by the support end.

The tubular structure comprises at least one longitudinally extending groove configured to exert angular retention of the electrical and/or electronic modules such that they are prevented from being rotationally moved; at least one longitudinally extending cavity configured to house at least one power or data cable, this being one from the electrical and/or electronic modules; and, at least one flange for each cavity, the at least one flange being arranged to cover access to the cavity whereon it is arranged.

The at least one flange is configured to be elastically deformed in order to establish a passage to the corresponding cavity. Thus, the flange is elastically deformable such that the flange, at least partially covering the access to the cavity whereon it is arranged, is in turn deformable establishing a passage to that cavity.

Accordingly, said passage can be defined by the elastic deformation of the flange such that one or several cables are able to be arranged through said access or passage, while said flange remains coupled in correspondence with the cavity.

Thus, the flanges are elastically deformable in order to enable the access to the cavities, as well as the passage of the cables through said accesses, to be covered. In this manner, the cables can be inserted or removed with respect to the cavities, the flanges arranged in correspondence with the cavities being maintained.

According to the present invention, there are two flanges, the flanges being arranged in each cavity such that they jointly cover the access to the cavity.

Additionally or alternatively, preferably, there are two grooves and they extend longitudinally according to the longitudinal extension of the tubular structure. The grooves are preferably located in the tubular structure according to an arrangement geometrically facing each other.

Additionally or alternatively, preferably, there are two cavities and they extend longitudinally according to the longitudinal extension of the tubular structure. The cavities are preferably located in the tubular structure according to an arrangement geometrically facing each other.

The tubular structure further comprises at least one longitudinal housing, the at least one longitudinal housing being arranged in order to partially house one of the flanges and exert retention on the flange.

The tubular structure is preferably configured to be joined with a handgrip, a plate to be fastened to a board, a coupling to increase the longitudinal extension of the tubular structure, and a panel with a radial groove.

According to the present disclosure, the base preferably comprises at least one channel, the at least one channel being configured for the passage of at least one cable. Preferably, the at least one channel is developed on a resting face of the base intended to make contact with a support surface of the structural assembly.

This base may comprise at least one hook in the at least one channel in order to removably secure the at least one cable. The base preferably has a perimeter contour with a chamfer to prevent a rolling of the base. This base preferably comprises at least one platen, the at least one platen being configured to be able to be removed such that a through opening is determined in the base.

According to another arrangement of the present disclosure, the base preferably comprises a casing and a threaded element fastened by one end to the base, the casing being able to be coupled at the support end and the threaded element being able to be screwed into the casing.

### Description of the figures

Figure 1 shows a cross-sectional perspective view of a tubular structure comprised in a structural assembly object of the invention.
Figure 2 shows a perspective view of a base and platens comprised in the structural assembly object of the invention.
Figure 3 shows a view of the platen comprised in the base of Figure 2.
Figure 4 shows an exploded view of the base and the platens of Figure 2.
Figure 5 shows a perspective view of the base without the platens of Figure 4.
Figure 6 shows an exploded view of the base, the platens, the tubular structure and a board.
Figure 7 shows a bottom view of the base holding the tubular structure.
Figure 8 shows a perspective view of a handgrip comprised in the structural assembly object of the invention.
Figure 9 shows a perspective view of the base holding the tubular structure with the handgrip.
Figure 10A shows a perspective view of a plate comprised in the structural assembly object of the invention.
Figure 10B shows a perspective view of a base comprised in the structural assembly object of the invention.
Figures 11 and 12 show a view of a coupling comprised in the structural assembly object of the invention.

### Detailed description of the invention

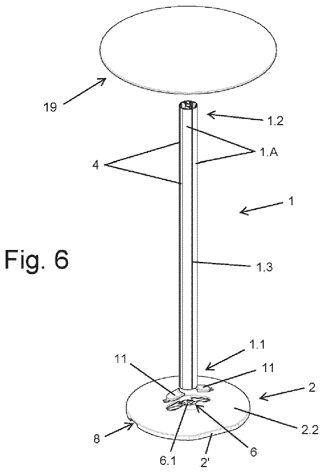

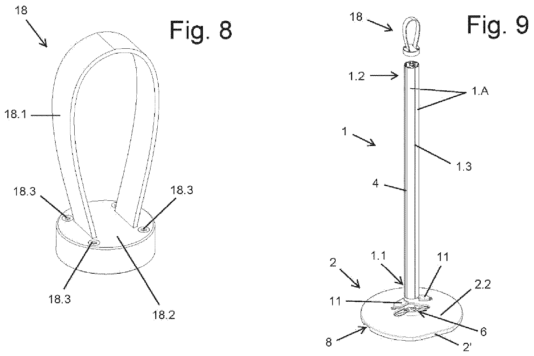

The invention relates to a structural assembly for supporting electrical and/or electronic modules, which have a power or data cable. The structural assembly comprises a tubular structure (1), which has a longitudinal extension such that it defines a support end (1.1) and an operational end (1.2), the operational end (1.2) being axially or longitudinally opposed to the support end (1.1). Said ends (1.1, 1.2) are indicated in Figures 6 and 9.

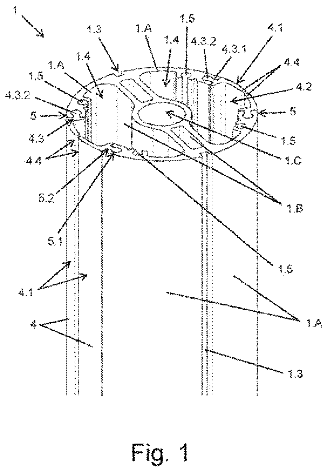

The tubular structure (1) comprises walls (1.A), sheets (1.B) and a central gap (1.C). There are preferably four sheets (1.B). According to a transverse cross section of the tubular structure (1), the walls (1.A) are arranged describing, preferably, two arches; the sheets (1.B) are preferably arranged as arms; and the central gap (1.C) defines a closed geometry, preferably with a circular shape. Both the walls (1.A) and the sheets (1.B) and the central gap (1.C) can be seen in Figure 1, which shows a transverse cross section of the tubular structure (1).

The tubular structure (1) is preferably cylindrical in shape, and therefore with a circular transverse cross section. Alternatively, the transverse cross section of the tubular structure (1), by means of the walls (1.A), can have a square, rectangular, triangular or oblong shape.

The walls (1.A), the sheets (1.B) and/or the central gap (1.C) extend longitudinally along the longitudinal extension of the tubular structure (1). Preferably, the walls (1.A), the sheets (1.B) and the central tube (1.C) extend longitudinally coincidentally with the longitudinal extension of the tubular structure (1).

The walls (1.A) are joined to the central tube (1.C) through the sheets (1.B) by a concave portion thereof (1.A). Preferably, there are two walls (1.A), one for each arch, or more, such as four, the walls (1.A) defining globally arched shapes. Likewise, there are four sheets (1.B), being arranged two by two joining the central tube (1.C) with each wall (1.A), or each of the arches, such that they define two separating spaces such that said spaces are aligned with each other and with a midpoint of said arches or separation between two of the walls (1.A).

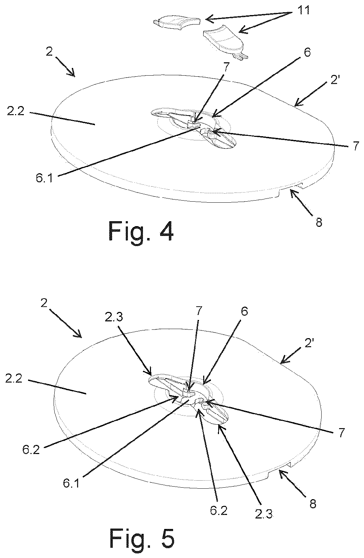

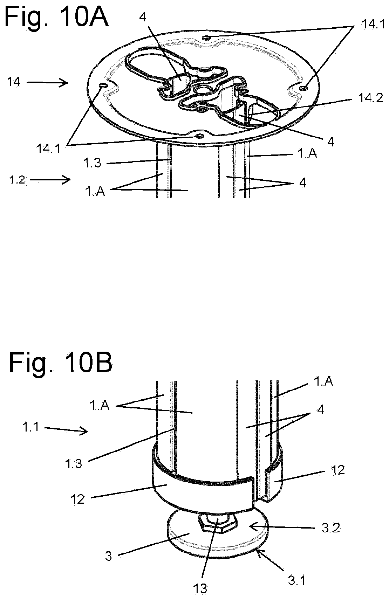

The structural assembly comprises a base (2; 3) for holding the tubular structure (1) by the support end (1.1). See for example Figures 4 and 10. The base (2; 3) has a resting face (2.1; 3.1), or lower face, and a visible face (2.2; 3.2), or upper face. Accordingly, the base (2; 3) is configured to rest on a support surface of the structural assembly by the resting face (2.1; 3.1) and to be arranged joined to the support end (1.1) by the visible face (2.2; 3.2).

In this manner, the base (2; 3) is able to be arranged on the support surface of the structural assembly by contact through the resting face (2.1; 3.1), while it (2; 3) holds the tubular structure (1) perpendicular, or substantially perpendicular, to said support surface.

The tubular structure (1) comprises at least one longitudinally extending groove (1.3) in order to prevent the corresponding electrical and/or electronic modules from being rotationally moved. The grooves (1.3) are clearly visible in Figure 1.

In other words, the tubular structure (1) comprises one, two, three, four, five or more of said longitudinally extending grooves (1.3) which are configured to exert angular retention on the electrical and/or electronic modules arranged, such that they are prevented from being rotationally moved according to a longitudinal point of the tubular structure (1).

Preferably, there are at least two grooves (1.3) comprised in the tubular structure (1) in order to reduce a rotational stress that can be received in each groove (1.3) when blocking a tendency or force directed towards angular or rotating movement of the electrical and/or electronic modules with respect to the tubular structure (1).

Accordingly, the grooves (1.3) are configured to partially house said electrical and/or electronic modules in a direct or indirect manner. According to the direct manner, the grooves (1.3) are configured to receive portions integral to these modules. According to the indirect manner, the grooves (1.3) are likewise configured to receive portions belonging to fastening elements for a sustained and removably fastened arrangement of said modules.

The grooves (1.3) extend longitudinally according to the longitudinal extension of the tubular structure (1). More specifically, said grooves (1.3) extend longitudinally according to the longitudinal extension of the walls (1.A), or the arches, by an external or convex portion. Preferably, the grooves (1.3) describe a straight or rectilinear path.

Moreover, there are preferably two of said grooves (1.3) and they are located in the tubular structure (1) according to an arrangement geometrically facing or opposing each other, in addition to in an external or visible portion of said tubular structure (1). Preferably, each of said grooves (1.3) is located coinciding with the midpoint of the arches, or separating point between two of the walls (1.A). Likewise, the grooves (1.3) preferably have a longitudinal extension equal to that of the tubular structure (1).

The tubular structure (1) is configured to hold the desired electrical and/or electronic modules. Since the tubular structure (1) has an elongated shape, said structure (1) provides an arrangement of the corresponding electrical and/or electronic modules at any point along the same.

Specifically, the tubular structure (1) provides this arrangement by being partially or completely surrounded and receiving a compression from said modules, either directly or through the corresponding fastening elements thereof. According to this compression, longitudinally extending grooves (1.3) which are also configured to exert longitudinal retention on the electrical and/or electronic modules arranged, such that they are prevented from being longitudinally moved according to a longitudinal point of the structure tubular (1).

The compression which can be exerted for sustained arrangement of the modules in the tubular structure (1) generates an additional penetrating force on the grooves (1.3), by the portions to be housed therein, which results in an oversizing of the grooves (1.3) and in an increase in the contact provided by these (1.3) such that the likewise longitudinal retention of the aforementioned modules is exerted.

Accordingly, the tubular structure (1) provides the ability to arrange the aforementioned electrical and/or electronic modules locked against movements both in the angular direction and in the longitudinal direction along the same.

The tubular structure (1) comprises at least one longitudinally extending cavity (1.4) configured to house at least one power or data cable. Thus, the cable of the electrical and/or electronic modules is able to be arranged inside the tubular structure (1), specifically along the corresponding cavity (1.4), such that they are prevented from being undesirably contacted.

Each of the cavities (1.4) extends longitudinally according to the longitudinal extension of the tubular structure (1). Preferably, the cavities (1.4) describe a straight or rectilinear path, in addition to in an internal, or externally hidden, portion of said tubular structure (1). There are preferably two of said cavities (1.4) and they are located in the tubular structure (1) according to an arrangement geometrically facing or opposing each other. Accordingly, the cavities (1.4) preferably have a longitudinal extension equal to that of the tubular structure (1).

In this manner, the tubular structure (1) enables the arrangement of the corresponding electrical and/or electronic modules along the same, said modules being connected by means of the cables thereof to outlets, configured as connection points, in order to establish corresponding electrical connections and/or data.

The tubular structure (1) comprises at least one flange (4) for each cavity (1.4), each flange (4) being able to be arranged to completely or partially cover an access to the cavity (1.4) in correspondence with which it is arranged. According to the present invention, there are two flanges (4) for each cavity (1.4), such that they jointly cover the access to the corresponding cavity (1.4). Said access from the outer portion of the tubular structure (1) is defined for a passage of the cables of the corresponding modules through the same.

The arrangement of the flanges (4) results in the power or data cable corresponding to each electrical and/or electronic module being able to be arranged inside the tubular structure (1), specifically along the corresponding cavity (1.4), being further hidden from view.

The flanges (4) are elastically deformable in order to enable the access to the cavities (1.4), as well as the passage of the cables through said accesses, to be covered. In this manner, the cables are insertable or removable with respect to the cavities (1.4), the flanges (4) arranged in correspondence with the cavities (1.4) being maintained.

Said flanges (4) have two faces (4.1, 4.2), a visible face (4.1) and a hidden face (4.2), and two edges (4.3, 4.4), a fastening edge (4.3) and a closing edge (4.4). The fastening edges (4.3) are defined mainly by a protuberance (4.3.1) and a widening (4.3.2), the widening (4.3.2) having a greater thickness than the protuberance (4.3.1).

In order to favour an arrangement of the cables through the accesses to the cavities (1.4), the flanges (4) arranged in correspondence with the cavities (1.4) being maintained, the flanges (4) may have the closing edge (4.4) pointing radially or laterally and externally with respect to an imaginary central longitudinal axis of the tubular structure (1).

According to this option, each of the flanges (4) can be defined by two planes. The planes form an angle with each other, such that the fastening edge (4.3) is along, or at least parallel to, one of the planes and the closing edge (4.4) along the other of the plans, or contained therein.

In correspondence with the accesses to the cavities (1.4), the tubular structure (1) comprises at least one longitudinal housing (5) for each cavity (1.4). The longitudinal housings (5) are arranged to partially house the flanges (4) and exert radial retention on them (4), such that the flanges (4) are arranged and maintained to completely or partially cover the access to the corresponding cavity (1.4).

These longitudinal housings (5) are defined with gaps (5.1) and with elongated openings (5.2), the elongated openings (5.2) being smaller than the corresponding gaps (5.1) acting as a narrowing.

On the one hand, said longitudinal housings (5) have open ends for the entry and exit of the flanges (4), and more specifically the open ends are defined for the entry and exit of the widenings (4.3.2) with respect to the gaps (5.1), as well as for the placement and removal, respectively, of the protuberances (4.3.1) with respect to the elongated openings (5.2).

On the other hand, the aforementioned longitudinal housings (5) and said flanges (4) are correspondingly configured such that the widenings (4.3.2) are able to be housed in the gaps (5.1) while the protuberances (4.3.1) are able to be arranged through the elongated openings (5.2), making the passage of the widenings (4.3.2) through the elongated openings (5.2) impossible due to the narrowing determined by the elongated openings (5.2). See Figure 1.

In this manner, the longitudinal housings (5) are configured to exert radial or lateral retention on the flanges (4), with respect to the imaginary central longitudinal axis of the tubular structure (1), in other words, which is perpendicular to said axis; in addition to enabling an axial movement of said flanges (4), in other words, parallel to said longitudinal axis, and preferably guided by means of movement of the protuberances (4.3.1) through the cavities (5.1). By means of this axial movement of the flanges (4), the protuberances (4.3.1) being in the cavities (5.1), the flanges (4) can be inserted or removed with respect to the longitudinal housings (5).

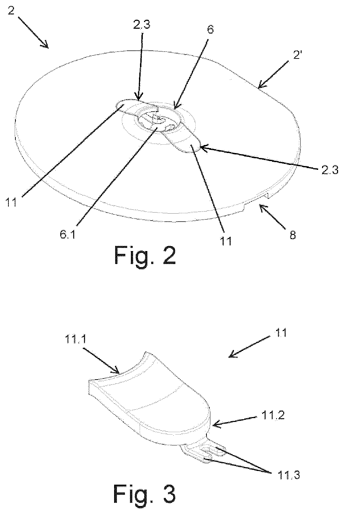

According to an exemplary embodiment, the base (2) is sized in order to provide, by itself, holding and stability to the tubular structure (1) such that it is maintained perpendicular, or substantially perpendicular, with respect to the support surface of the structural assembly. The base (2) is configured for the arrangement of the support end (1.1) fitted therein. To do so, the base (2) comprises a recess (6) which has a bottom (6.1) such that the recess (6) houses the support end (1.1) and the bottom (6.1) establishes an insertion limit of the tubular structure (1) in the base (2). See, for example, Figures 2, 4 and 5.

Specifically, the bottom (6.1) is arranged to establish the insertion limit of the support end (1.1) in the base (2). Accordingly, the bottom (6.1) is configured to preferably make contact, in correspondence with the support end (1.1), with the central tube (1.C) and the sheets (1.B), in addition to with the arches described by the walls (1.A).

Thus, the bottom (6.1) being contacted by the support end (1.1), the bottom (6.1) leaves the cavities (1.4) free from closing or covering. Preferably, the bottom (6.1) leaves the flanges (4) retained by the longitudinal housings (5) free from contact. Alternatively, the bottom (6.1) is additionally arranged to establish a movement limit of the flanges (4). To do so, the bottom (6.1) is arranged to make contact with the flanges (4), specifically in correspondence with at least the portions housed in the gaps (5.1).

The base (2) comprises extensions (7), preferably four, said extensions (7) being preferably joined in correspondence with the bottom (6.1). Also, preferably, said extensions (7) are laterally or radially joined to the base (2). See for example Figures 4 and 5. The tubular structure (1), moreover, comprises holes (1.5), preferably four, one for each extension (7). Each of these holes (1.5) is preferably located inside one of the cavities (1.4) and together with one of the longitudinal housings (5). See Figure 1.

Accordingly, the support end (1.1) can be inserted into the base (2) being housed in the recess (6) and in contact with the bottom (6.1), the holes (1.5) further being axially aligned with the extensions (7).

Preferably, said holes (1.5) are defined by a longitudinal wall which defines a closed contour except for an opening. The opening is located such that a passage through the same is according to a movement in a lateral or radial direction, or even parallel, towards the imaginary central longitudinal axis of the tubular structure (1).

According to one option, the holes (1.5) and the extensions (7) are able to be arranged axially aligned such that a tightening element, for example a screw, can be inserted through said extensions (7) and up to the holes (1.5) in order to establish a joint between them, or what is the same, between the tubular structure (1) and the base (2).

According to another option, the holes (1.5) and the extensions (7) are able to be arranged axially aligned such that the extensions (7) are able to be arranged partially fitted in the aforementioned holes (1.5) in order to establish a joint between them, or what is the same, between the tubular structure (1) and the base (2).

Thus, according to either of the two options described, an additional fastening between said extensions (7) and the aforementioned holes (1.5) can be established such that it prevents a rotation of the tubular structure (1) with respect to the base (2), the support end (1.1) being fitted in the base (2), and more specifically in the recess (6).

The opening of each hole (1.5) is arranged in order to provide structural flexibility such that the insertion of the extensions (7) or of the tightening elements is facilitated, in addition to enabling the longitudinal wall to prevent a rotation or twist of the tubular structure (1) with respect to the base (2), the support end (1.1) being fitted in the recess (6).

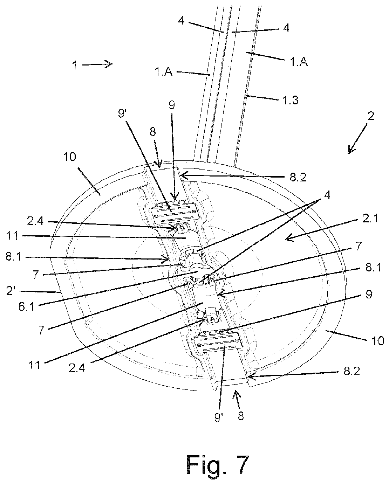

The base (2) comprises at least one channel (8), and preferably two, in correspondence with the resting face (2.1), the channel (8) being configured for the passage of at least one cable. In this manner, the cables are able to be arranged extending also in correspondence with the base (2). The channels (8) are indicated in Figure 7.

The channels (8) have a depth which enables the resting face (2.1) to rest against the support surface of the structural assembly and to maintain the corresponding cables housed in the channels (8) free from compressions against said support surface. Likewise, preferably, the channels (8) have a width which enables two, three, four, five or more of the cables to be housed in parallel. In this manner, the corresponding cables in correspondence with the base (2) are able to be arranged prevented from being contacted in an unwanted manner, in addition to being hidden from view.

The base (2) additionally comprises at least one hook (9) in each of the channels (8) in order to removably secure at least one cable. Preferably the hooks (9) are for securing two, three, four, five or more cables. Accordingly, the arrangement of the hooks (9) in the channels (8) enables the cables to be maintained ordered and secured, even with the structural assembly being moved. Thus, the risk of being contacted in an unwanted manner, and therefore obviously also in a dangerous manner, is reduced.

Additionally, and as a complement to said hooks (9), the base (2) comprises a tightening element (9') in order to tighten the corresponding cables in one of the hooks (9). Preferably, there is one tightening element (9') for each hook (9). Likewise, the tightening elements (9') are able to be arranged in correspondence with the hooks such that they jointly secure the cables between both of them (9, 9'). Accordingly, this arrangement of the tightening elements (9') can be removed and is preferably established by means of threaded or pressure connections.

In order to facilitate the movement of the structural assembly, the base (2) has a perimeter contour with a chamfer (2'). This chamfer (2') is arranged in order to prevent a rotation or rolling of the base (2) by resting it against the support surface of the structural assembly. Furthermore, an uncontrolled movement of the cables coming out of the channels (8) is also prevented. In this manner, the movements of the present structural assembly are facilitated and simplified.

The recess (6) is configured to make contact with the support end (1.1) of the tubular structure (1) by means of the bottom (6.1), in turn defining at least one communicating passage (6.2) between the resting face (2.1) and the visible face (2.2). There are preferably two communicating passages (6.2). See Figure 5. Accordingly, each of the communicating passages (6.2) is arranged communicating one of the cavities (1.4) with one of the channels (8), the support end (1.1) being housed in the recess (6).

The channels (8) have two ends (8.1, 8.2), an inner end (8.1) in correspondence with which one of the communicating passages (6.2) is located and an outer end (8.2) which defines an exit which is radially or laterally to the outside of the base (2).

The resting face (2.1) has contact areas (10) for making contact with the support surface of the structural assembly. These contact areas (10) are arranged along the perimeter contour of said resting face (2.1), except in correspondence with the outer ends (8.2), laterally along the channels (8) and partially surrounding the area corresponding to the bottom (6.1). Said contact areas (10) may have protections for combating against wear and impacts due to contact against the aforementioned support surface.

The contact areas (10), in correspondence with the bottom (6.1), project from the base (2) more than the bottom itself (6.1) such that the cables located through one of the channels (8) are also able to be arranged through the other one of the channels (8), without receiving compression by means of the bottom (6.1) against the support surface of the structural assembly, the contact areas (10) making contact with said surface, either directly or through the protections. In other words, the channels (8) are communicated with each other by the inner ends (8.1) thereof in correspondence with the bottom (6.1) for the passage of the corresponding cables.

Since there are two channels (8), they are preferably aligned with each other and the bottom (6.1) being located halfway between them. Accordingly, each of the cavities (1.4) is communicated with the inner end (8.1) of one of the channels (8) through one of the communicating passages (6.2).

The base (2) comprises at least one platen (11), preferably two or one for each channel (8). In Figure 3, one of the platens (11) is clearly shown. The platens (11) are configured to be removably able to be arranged and such that they cover through openings (2.3) which cross through the base (2) communicating the resting face (2.1) and the visible face (2.2) with each other, in a portion other than that of the location of the recess (6). In Figures 2 and 5, the through openings (2.3) appear referenced.

The through openings (2.3) are sized in order for elements with a larger size than the cables to pass through them, specifically at least elements such as male plugs. Thus, this prevents the need to lift the base (2), with or without the tubular structure (1) held therein, in order to enable the passage of the elements larger than the cables.

The platens (11) have a free end (11.1) configured to partially receive the outer contour of the tubular structure (1). Accordingly, said free ends (11.1) have an end wall, which has a preferably concave shape. The platens (11) additionally have a fastening end (11.2) and a projection (11.3), the projection (11.3) being externally projected in the platens (11) from said fastening end (11.2). Preferably, said projection (11.3) branches into two branches. See Figure 3.

In a complementary manner, and in correspondence with the channels (8), the base (2) has a hollowed area (2.4) with a bulging that is sized in a complementary manner with respect to the projections (11.3) such that the flanges (11) can be fastened in the base (2) by means of an arrangement using pressure of said projections (11.3) in said hollowed areas (2.4). Preferably, the removable arrangement of the flanges (11) in correspondence with the through openings (2.3) is established with the bulging of each of the hollowed areas (2.4) being held by the branches of the corresponding projection (11.3).

According to another exemplary embodiment, the base (3) is sized in order to provide holding and stability to the tubular structure (1) only together with some additional element such that it is maintained perpendicular, or substantially perpendicular, with respect to the support surface of the structural assembly, or what is the same, to the contact areas (10) of the resting face (2.1).

This base (3) comprises a casing (12) and a threaded element (13), the threaded element (13) being preferably fastened by one end to the base (3), the casing (12) being able to be coupled at the support end (1.1) and the threaded element (13) being able to be screwed into the casing (12). See Figure 10B.

Alternatively, said base (3) comprises the casing (12) and the threaded element (13), said element (13) being fastened by one end to the casing (12), the casing (12) being able to be coupled at the support end (1.1) and the threaded element (13) being able to be screwed into the base (3). In this alternative, the thickness or height of the base (3) is defined as a function of the maximum degree of insertion foreseen by the threaded element (13).

In both possibilities, said support end (1.1) of the tubular structure (1) is able to be arranged fitted in the casing (12). Likewise, the casing (12) is joined to the base (3) by means of the threaded element (13). In this manner, a separating distance between the casing (12) and the base (3) varies according to a degree of threading of the threaded element (13).

According to one option, the casing (12) has at least one separation, as seen in Figure 10B, for the passage of the corresponding cables. Accordingly, the support end (1.1) of the tubular structure (1) is preferably arranged such that the flanges (4) and/or the cavities (1.4) are at least partially facing one of said separations.

According to another option, said threaded element (13) can be longitudinally hollow in order to partially house the corresponding cable through the same. Additionally, the base (3) can have a side gap for the exit of the cable in a directed manner, in addition to being close to, or even in contact with, the support surface of the structural assembly, as occurs in the other exemplary embodiment by means of the channels (8). In this manner, the cable is both hidden and prevented from being contacted in the extension thereof from the tubular structure (1) to the base (3), in addition to in correspondence with the base (3).

According to both exemplary arrangements, the tubular structure (1) is configured for joining with an operational element comprised in the present structural assembly such that said structural assembly is provided with additional functionalities. This joining can be either by screwing or by fitting and/or pressure.

According to a first example, the operational element is a handgrip (18) that has a handle (18.1) to be grasped, a body (18.2) with fastening elements (18.3), preferably by screwing into the holes (1.5) of the operational end (1.2). The handgrip (18) provides a grip such that the structural assembly can be moved. See Figures 8 and 9.

According to a second example, the operational element is a plate (14) which can be fastened, preferably by screwing, into another element, such as a board (19) or similar, for example of a table. Accordingly, the plate (14) includes fastening points (14.1), in addition to a portion (14.2) configured for fitted insertion of the operational end (1.2). See Figure 10A.

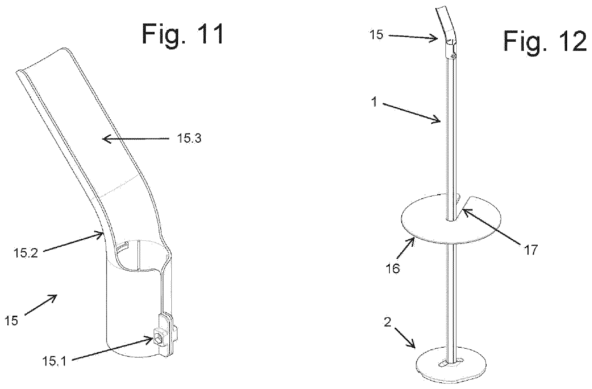

According to a third example, the operational element is a coupling (15) able to be arranged at the operational end (1.2) as a longitudinal extension of the tubular structure (1), while acting as a directing element for elements such as cables in the vertical direction. Accordingly, the coupling (15) has a tightening part (15.1) to be arranged at the operational end (1.2) exerting tightening at said end (1.2). The coupling (15) can have an extension with one or more curvatures (15.2). Additionally or alternatively, the coupling (15) may include an open area (15.3), for example in order to facilitate the insertion of the cables. See Figures 11 and 12.

According to a fourth example, the operational element is a panel (16), the panel (16) being able to be arranged such that they define a table. Preferably, the panel (16) has a radial groove (17). This radial groove (17) is arranged to house or receive the tubular structure (1) through the same. In other words, the radial groove (17) is for the arrangement of the panel (16) at a point along the longitudinal extension of the tubular structure (1) being crossed through by said structure (1), as seen in Figure 12.

Preferably, said radial groove (17) extends from a central area of the panel (16) outwards until it is open. In this manner, the panel (16) is able to be arranged by being crossed through by the tubular structure (1) by means of a lateral movement, instead of an axial one, either by said tubular structure (1) or by a portion of the aforementioned panel (16).

## Claims

1. A structural assembly for supporting electrical and/or electronic modules, the structural assembly comprising:
- a longitudinally extending tubular structure (1) defining a support end (1.1) and an operational end (1.2), axially opposed to the support end (1.1); and
- a base (2; 3) for holding the tubular structure (1) by the support end (1.1);
wherein the tubular structure (1) comprises:
- at least one longitudinally extending groove (1.3) configured to exert angular retention of the electrical and/or electronic modules such that they are prevented from being rotationally moved;
- at least one longitudinally extending cavity (1.4) configured to house at least one power or data cable; and
- at least one flange (4) for each cavity (1.4), the at least one flange (4) being arranged to cover access to the cavity (1.4) whereon it is arranged;
**characterised in that**:
the at least one flange (4) is elastically deformable in order to simultaneously establish a passage to the cavity (1.4); and
there are two flanges (4), the flanges (4) being arranged in each cavity (1.4) such that they jointly cover the access to the cavity (1.4).

2. The structural assembly according to claim 1, wherein there are two grooves (1.3) and they extend longitudinally according to the longitudinal extension of the tubular structure (1).

3. The structural assembly according to claim 2, wherein the grooves (1.3) are located in the tubular structure (1) according to an arrangement geometrically facing each other.

4. The structural assembly according to any one of claims 1 to 3, wherein there are two cavities (1.4) and they extend longitudinally according to the longitudinal extension of the tubular structure (1).

5. The structural assembly according to claim 4, wherein the cavities (1.4) are located in the tubular structure (1) according to an arrangement geometrically facing each other.

6. The structural assembly according to any one of claims 1 to 3, wherein the tubular structure (1) additionally comprises at least one longitudinal housing (5), the at least one longitudinal housing (5) being arranged in order to partially house one of the flanges (4) and exert retention on the flange (4).

7. The structural assembly according to any one of claims 1 to 6, wherein the base (2) comprises at least one channel (8), the at least one channel (8) being configured for the passage of the at least one cable.

8. The structural assembly according to any one of claims 1 to 7, wherein the tubular structure (1) is configured to be joined with a handgrip (18), with a plate (14) to be fastened to a board (19), with a coupling (15) to increase the longitudinal extension of the tubular structure (1) or with a panel (16) with a radial groove (17).

## Patentansprüche

1. Strukturelle Baugruppe zur Halterung von elektrischen und/oder elektronischen Modulen, wobei die strukturelle Baugruppe Folgendes umfasst:
- eine sich längs erstreckende rohrförmige Struktur (1), die ein Halterungsende (1.1) und ein Betriebsende (1.2) definiert, axial gegenüber dem Halterungsende (1.1); und
- eine Basis (2; 3) zum Halten der rohrförmigen Struktur (1) durch das Halterungsende (1.1);
wobei die rohrförmige Struktur (1) Folgendes umfasst:
- zumindest eine sich längs erstreckende Nut (1.3), die konfiguriert ist, um winklige Rückhaltung der elektrischen und/oder elektronischen Module auszuüben, sodass sie daran gehindert werden, drehbewegt zu werden;
- zumindest einen sich längs erstreckenden Hohlraum (1.4), der konfiguriert ist, um zumindest ein Strom- oder Datenkabel zu beherbergen; und
- zumindest einen Flansch (4) für jeden Hohlraum (1.4), wobei der zumindest eine Flansch (4) angeordnet ist, um Zugang zu dem Hohlraum (1.4), an dem er angeordnet ist, abzudecken;
**dadurch gekennzeichnet, dass**:
der zumindest eine Flansch (4) elastisch verformbar ist, um gleichzeitig einen Durchgang zu dem Hohlraum (1.4) herzustellen; und
es zwei Flansche (4) gibt, wobei die Flansche (4) in jedem Hohlraum (1.4) angeordnet sind, sodass sie gemeinsam den Zugang zu dem Hohlraum (1.4) abdecken.

2. Strukturelle Baugruppe nach Anspruch 1, wobei es zwei Nuten (1.3) gibt und sie sich längs gemäß der Längserstreckung der rohrförmigen Struktur (1) erstrecken.

3. Strukturelle Baugruppe nach Anspruch 2, wobei sich die Nuten (1.3) in der rohrförmigen Struktur (1) gemäß einer Anordnung befinden, die einander geometrisch zugewandt ist.

4. Strukturelle Baugruppe nach einem der Ansprüche 1 bis 3, wobei es zwei Hohlräume (1.4) gibt und sie sich längs gemäß der Längserstreckung der rohrförmigen Struktur (1) erstrecken.

5. Strukturelle Baugruppe nach Anspruch 4, wobei sich die Hohlräume (1.4) in der rohrförmigen Struktur (1) gemäß einer Anordnung befinden, die einander geometrisch zugewandt ist.

6. Strukturelle Baugruppe nach einem der Ansprüche 1 bis 3, wobei die rohrförmige Struktur (1) zusätzlich zumindest ein Längsgehäuse (5) umfasst, wobei das zumindest eine Längsgehäuse (5) angeordnet ist, um einen der Flansche (4) teilweise zu beherbergen und Rückhaltung auf den Flansch (4) auszuüben.

7. Strukturelle Baugruppe nach einem der Ansprüche 1 bis 6, wobei die Basis (2) zumindest einen Kanal (8) umfasst, wobei der zumindest eine Kanal (8) für den Durchgang des zumindest einen Kabels konfiguriert ist.

8. Strukturelle Baugruppe nach einem der Ansprüche 1 bis 7, wobei die rohrförmige Struktur (1) konfiguriert ist, um mit einem Handgriff (18), mit einer Platte (14), die an einer Platte (19) zu befestigen ist, mit einer Kopplung (15), um die Längserstreckung der rohrförmigen Struktur (1) zu erhöhen, oder mit einer Platte (16) mit einer radialen Nut (17) verbunden zu sein.

## Revendications

1. Ensemble structural destiné à supporter des modules électriques et/ou électroniques, l'ensemble structural comprenant :
- une structure tubulaire s'étendant longitudinalement (1) définissant une extrémité de support (1.1) et une extrémité fonctionnelle (1.2), axialement opposée à l'extrémité de support (1.1) ; et
- une base (2 ; 3) destinée à maintenir la structure tubulaire (1) par l'extrémité de support (1.1) ;
ladite structure tubulaire (1) comprenant :
- au moins une rainure s'étendant longitudinalement (1.3) conçue pour exercer une retenue angulaire des modules électriques et/ou électroniques de sorte qu'ils soient empêchés d'être déplacés en rotation ;
- au moins une cavité s'étendant longitudinalement (1.4) conçue pour loger au moins un câble d'alimentation ou de données ; et
- au moins un rebord (4) pour chaque cavité (1.4), le au moins un rebord (4) étant agencé pour couvrir l'accès à la cavité (1.4) sur laquelle elle est agencée ;
**caractérisé en ce que** :
l'au moins un rebord (4) est élastiquement déformable afin d'établir simultanément un passage vers la cavité (1.4) ; et
deux rebords (4) étant présents, les rebords (4) étant agencés dans chaque cavité (1.4) de sorte qu'ils couvrent conjointement l'accès à la cavité (1.4).

2. Ensemble structural selon la revendication 1, deux rainures (1.3) étant présentes et s'étendant longitudinalement selon l'extension longitudinale de la structure tubulaire (1).

3. Ensemble structural selon la revendication 2, lesdites rainures (1.3) étant situées dans la structure tubulaire (1) selon un agencement géométriquement en regard l'une de l'autre.

4. Ensemble structural selon l'une quelconque des revendications 1 à 3, deux cavités (1.4) étant présentes et s'étendant longitudinalement selon l'extension longitudinale de la structure tubulaire (1).

5. Ensemble structural selon la revendication 4, lesdites cavités (1.4) étant situées dans la structure tubulaire (1) selon un agencement géométriquement en regard l'une de l'autre.

6. Ensemble structural selon l'une quelconque des revendications 1 à 3, ladite structure tubulaire (1) comprenant en outre au moins un logement longitudinal (5), le au moins un logement longitudinal (5) étant agencé afin de loger partiellement l'un des rebords (4) et d'exercer une retenue sur le rebord (4).

7. Ensemble structural selon l'une quelconque des revendications 1 à 6, ladite base (2) comprenant au moins un canal (8), ledit au moins un canal (8) étant configuré pour le passage dudit au moins un câble.

8. Ensemble structural selon l'une quelconque des revendications 1 à 7, ladite structure tubulaire (1) étant conçue pour être assemblée avec une poignée (18), avec une plaque (14) à fixer à un panneau (19), avec un couplage (15) pour augmenter l'extension longitudinale de la structure tubulaire (1) ou avec un panneau (16) avec une rainure radiale (17).
